# EUROPÄISCHE PATENTSCHRIFT

(11) **EP 3 202 363 B1**
(45) Veröffentlichungstag und Bekanntmachung des Hinweises auf die Patenterteilung: **19.07.2023**
(21) Anmeldenummer: 16154292.3
(22) Anmeldetag: 04.02.2016
(51) Int. Cl.: A61C 3/00, A61C 3/06, A61C 3/03, A61C 3/02, A61C 17/16, A61C 17/22, A61C 17/24, A61C 17/32

(54) **ZAHNÄRZTLICHES WERKZEUG UND ZAHNÄRZTLICHES SYSTEM**
DENTAL TOOL AND DENTAL SYSTEM
OUTIL DENTAIRE ET SYSTEME DENTAIRE

(43) Veröffentlichungstag der Anmeldung: 09.08.2017
(73) Patentinhaber: KaVo Dental GmbH, 88400 Biberach (DE)
(72) Erfinder: Claßen, Thomas, 88518 Herbertingen (DE); Haarmann, Markus, 88400 Biberach (DE); Kuhn, Bernhard, 88400 Biberach (DE)
(74) Vertreter: Thun, Clemens

(56) Entgegenhaltungen:
- WO-A1-2014/053218
- WO-A1-2014/111227
- US-A- 3 740 853
- US-A- 5 336 089
- US-A- 5 369 916
- US-A- 5 762 498
- US-A1- 2009 142 730
- US-A1- 2009 170 054
- US-A1- 2010 040 995

## Beschreibung

Die Erfindung betrifft ein zahnärztliches Werkzeug mit einem Schaftbereich zur Kopplung mit einem zahnärztlichen Handstück und mit einem Arbeitsbereich. Außerdem betrifft die Erfindung ein zahnärztliches System mit einem Handstück und einem entsprechenden Werkzeug.

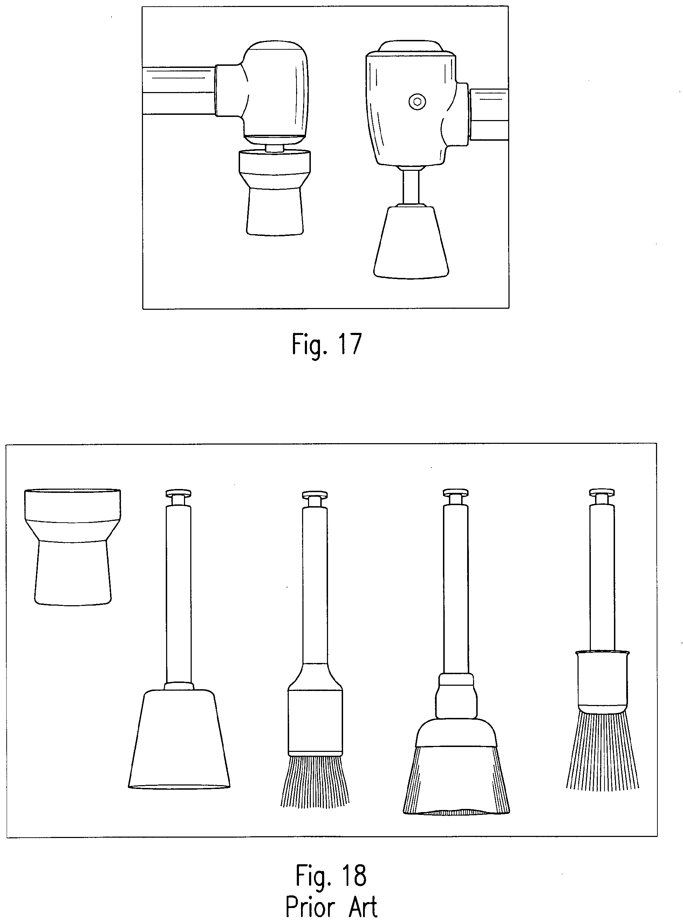

Wie in Fig. 18 beispielhaft gezeigt, sind aus dem Stand der Technik unterschiedliche zahnärztliche Werkzeuge bekannt. Die Werkzeuge weisen einen Schaftbereich auf, der zur Kopplung mit einem zahnärztlichen Handstück ausgebildet ist, sowie einen, mit dem Schaftbereich verbundenen Arbeitsbereich, hier in Form einer Bürste oder eines Polierkelchs. Das entsprechende Handstück weist dabei eine längliche Griffhülse mit einem Kopfbereich auf, der eine Aufnahmeöffnung zur Aufnahme eines entsprechenden Werkzeugs aufweist.

Der Schaftbereich eines solchen Werkzeugs ist gemäß der Norm DIN EN 1797-1 oder 1797-2 ausgebildet, so dass er an seinem, dem Arbeitsbereich gegenüber liegenden Ende eine Ringnut aufweist, die der axialen Sicherung dient, wenn das Werkzeug wie vorgesehen in den Kopfbereich eingesetzt ist.

Die bekannten Werkzeuge sind verhältnismäßig groß und sind mit einem merklichen Spiel mit dem Kopfbereich verbunden. Im Fall einer oszillierenden Bewegung des Werkzeugs führt dies zu einer deutlichen Begrenzung der Effektivität bei der Verwendung. Außerdem weisen die bekannten Werkzeuge Nachteile mit Bezug auf den Herstellungsaufwand und die Handhabung auf. So muss beispielsweise zum Entnehmen eines entsprechenden Werkzeugs aus dem Kopfbereich ein am Kopfbereich ausgebildetes Druckelement betätigt werden.

Aus der US 5,369,916 ist ein zahnärztliches Polierwerkzeug mit einem zylinderartigen Schaftbereich und einem Arbeitsbereich bekannt. Der Schaftbereich besteht aus Kunststoff.

Aus der US 3,740,853 ist ein Zahnprophylaxe-Winkelstück bekannt, das ein Werkzeug umfasst, das mit einem, aus Kunststoff bestehenden Schaftbereich in ein Gehäuse des Winkelstücks eingesetzt ist.

Aus der US 2010/0040995 A1 ist ein Applikator bekannt, der einen Schaft aus Kunststoff aufweist. Ein Schaftaufsatz aus Elastomer oder Gummi ist auf den Schaft aufgesteckt.

Aus der US 5,336,089 ist ein zahnärztliches Handstück bekannt, das einen abnehmbaren Aufsatz aufweist, in dem ein Werkzeug drehbar gelagert werden kann. Der Aufsatz umfasst einen rohrartigen Abschnitt, der aus Kunststoff besteht.

Aus der US 5,762,498 ist ein dentales Werkzeug bekannt, das einen Schaft aus Kunststoff aufweist.

Aus der US 2009/0142730 A1 ist ein Winkelstück mit einem Kopf bekannt, in dem zur drehbaren Lagerung eines Werkzeugs eine Hülse angeordnet ist. Der Schaft des Werkzeugs lässt sich in die Hülse einstecken. Zur axialen Sicherung des Werkzeugschaftes dient ein Sicherungsring, der mit federartigen Eingreifelementen in eine am Werkzeugschaft ausgebildete Nut eingreift.

Der Erfindung liegt die Aufgabe zugrunde, ein entsprechendes verbessertes Werkzeug anzugeben. Insbesondere soll das Werkzeug bei einfacher Herstellungsmöglichkeit eine erleichterte Bedienung ermöglichen, sowie eine hohe Effektivität. Außerdem soll ein entsprechendes verbessertes zahnärztliches System mit einem Handstück und einem entsprechenden Werkzeug angegeben werden.

Diese Aufgabe wird gemäß der Erfindung mit den in den unabhängigen Ansprüchen genannten Gegenständen gelöst. Besondere Ausführungsarten der Erfindung sind in den abhängigen Ansprüchen angegeben.

Gemäß der Erfindung ist ein zahnärztliches Werkzeug mit einem Schaftbereich vorgesehen, der zur Kopplung mit einem zahnärztlichen Handstück ausgebildet ist, sowie mit einem, mit dem Schaftbereich verbundenen Arbeitsbereich. Dabei ist der Schaftbereich des zahnärztlichen Werkzeugs für eine betätigungslose, rastbare Einsetz- und Entnahmemöglichkeit ausgebildet.

Hierdurch ist insbesondere eine erleichterte Handhabung des Werkzeugs ermöglicht.

Erfindungsgemäß besteht dabei zumindest der Schaftbereich des Werkzeugs aus Kunststoff, Silikon oder Gummi. Hierdurch ist bei geeigneten mechanischen Eigenschaften zur Erzielung der Rastverbindung zwischen dem Schaftbereich und dem Handstück insbesondere eine besonders kostengünstige Herstellung des Werkzeugs ermöglicht.

Vorzugsweise besteht dabei auch der Arbeitsbereich aus Kunststoff, Silikon oder Gummi. Besonders bevorzugt bestehen dabei der Schaftbereich und der Arbeitsbereich aus Kunststoffen, Silikonen bzw. Gummis unterschiedlicher Härte. So lassen sich besonders geeignet gute Kraftübertragungseigenschaften des Schaftbereichs und dabei geeignete mechanische Eigenschaften des Arbeitsbereichs erzielen.

Eine besonders einfache Herstellung ist ermöglicht, wenn der Schaftbereich und der Arbeitsbereich einstückig miteinander verbunden sind.

Erfindungsgemäß ist der Schaftbereich im Wesentlichen zylinderartig ausgebildet und - bezüglich einer Längsachse des Schaftbereichs - zur axialen oder radialen Verrastung mit einer Antriebskomponente des zahnärztlichen Handstücks ausgebildet. Hierdurch lässt sich das Werkzeug besonders einfach mit dem Handstück verbinden, also in den Kopfbereich einsetzen und auch wieder aus dem Kopfbereich entnehmen.

Erfindungsgemäß sind an dem Schaftbereich ein oder mehrere Federarme angeordnet oder der Schaftbereich weist eine sich über den gemeinsamen Umfang erstreckende ringartige Rastausnehmung auf. Durch die Federarm-Gestaltung ist eine besonders geeignete, einfach herzustellende, sichere und dennoch geeignet wieder lösbare Verrastung bzw. Rastverbindung zwischen dem Werkzeug und dem Handstück ermöglicht.

Dabei weist der Schaftbereich vorzugsweise mindestens einen Schlitz auf, durch welchen parallel zur Längsachse verlaufende Federarme gebildet werden. So lassen sich die Federarme besonders geeignet bilden. Der Schlitz kann dabei beispielsweise an dem, dem Arbeitsbereich gegenüberliegenden Ende des Schaftbereichs ausgebildet sein.

Der bzw. die Federarme weisen vorzugsweise nach außen ragende Rastvorsprünge oder Rastverdickungen auf, insbesondere an ihrem, dem Arbeitsbereich gegenüberliegenden Ende. Hierdurch ist eine besonders geeignete axiale Sicherung des Werkzeugs im Kopfbereich des Handstücks ermöglicht.

Durch die Gestaltung mit der Rastausnehmung ist eine besonders geeignete axiale Sicherung des Werkzeugs im Kopfbereich des Handstücks ermöglicht. Vorzugsweise erstreckt sich die Rastausnehmung über den gesamten Umfang.

Erfindungsgemäß weist der Schaftbereich ferner einen, sich vorzugsweise in der Nähe des Arbeitsbereichs befindenden Mitnehmerbereich auf, der für eine formschlüssige Kopplung mit einer Antriebskomponente des zahnärztlichen Handstücks ausgebildet ist, durch die eine um die Längsachse verlaufende Drehbewegung der Antriebskomponente auf den Schaftbereich übertragen werden kann. Hierdurch ist eine besonders geeignete Kraftübertragung von der Antriebskomponente des Handstücks auf das Werkzeug ermöglicht.

Vorzugsweise weist der Mitnehmerbereich einen eckigen, beispielsweise einen polygonalen Außenumfang auf. So lässt sich besonders geeignet eine spielarme Kopplung erzielen. Alternativ hierzu kann der Mitnehmerbereich auch für eine Vielzahnverbindung ausgebildet sein

Vorzugsweise ist der Arbeitsbereich als Polierer, Bürste, Schleifer oder Feile ausgebildet. Dabei kann der Arbeitsbereich beispielsweise vorteilhaft kelchartig, kegelig oder zylindrisch ausgebildet sein.

Gemäß einem weiteren Aspekt der Erfindung ist ein zahnärztliches System mit einem zahnärztlichen Handstück vorgesehen, welches eine längliche Griffhülse mit einem darin angeordneten Antrieb sowie einen am vorderen Ende der Griffhülse angeordneten Kopfbereich zur lösbaren Aufnahme eines zahnärztlichen Werkzeugs aufweist, sowie mit einem erfindungsgemäßen zahnärztlichen Werkzeug. Vorzugsweise ist dabei der Antrieb dazu ausgebildet, eine Drehbewegung und/oder Schwingung und/oder axiale Hubbewegung auf das Werkzeug zu übertragen. Dies ist beispielsweise besonders vorteilhaft, wenn es sich bei dem Handstück um ein so genanntes Prophylaxe-Handstück, insbesondere um ein so genanntes ein Prophylaxe-Winkelstück handelt.

Vorzugsweise weisen die Griffhülse und vorzugsweise auch der Kopfbereich eine Kunststoffummantelung auf. Hierdurch ist ein besonders angenehmes Griffgefühl bei einem Arbeiten mit dem Handstück ermöglicht. Auch aus Gewichts- und Kostengründen eignet sich eine solche Kunststoffummantelung in besonderem Maße.

Vorzugsweise besteht die Griffhülse mit dem Kopfbereich aus Kunststoff. So lässt sich insbesondere eine Gestaltung ohne eine Trennfuge erzielen. Vorzugsweise handelt es sich bei dem Kunststoff um Polyetheretherketon (PEEK), Polyphenylsulfon (PPSU) oder Polyetherimid (PEI).

Die Erfindung wird im Folgenden anhand eines Ausführungsbeispiels und mit Bezug auf die Zeichnungen näher erläutert. Es zeigen:
- Fig. 1: eine Skizze eines Ausführungsbeispiels eines erfindungsgemäßen Werkzeugs,
- Fig. 2: eine Querschnittskizze hierzu,
- Fig. 3: eine Seitenansicht hierzu,
- Fig. 4: eine Skizze eines Schnitts entlang der Linie A - A in Fig. 3,
- Fig. 5: eine Skizze eines Handstücks,
- Fig. 6: eine Querschnittskizze zu einem weiteren Ausführungsbeispiel,
- Fig. 7: eine Seitenansicht hierzu,
- Fig. 8: eine Skizze eines Schnitts entlang der Linie A - A in Fig. 7,
- Fig. 9: eine Skizze zu einem weiteren Ausführungsbeispiel,
- Fig. 10: eine weitere Ansicht hierzu, in Richtung der Längsachse des Schaftbereichs betrachtet,
- Fig. 11: eine Skizze zu einem weiteren Ausführungsbeispiel,
- Fig. 12: eine weitere Ansicht hierzu, in Richtung der Längsachse des Schaftbereichs betrachtet,
- Fig. 13: eine Skizze zu einem weiteren Werkzeug, welches nicht Gegenstand der Erfindung ist,
- Fig. 14: eine weitere Ansicht zu dem Werkzeug von Figur 13, in Richtung der Längsachse des Schaftbereichs betrachtet,
- Fig. 15: eine Skizze eines Schnitts entlang der Linie A - A in Fig. 13,
- Fig. 16: eine Skizze eines Schnitts entlang der Linie B - B in Fig. 15,
- Fig. 17: zwei unterschiedliche Kopfbereiche von Handstücken, jeweils mit einem Werkzeug bestückt und
- Fig. 18: fünf unterschiedliche Werkzeuge gemäß dem Stand der Technik.

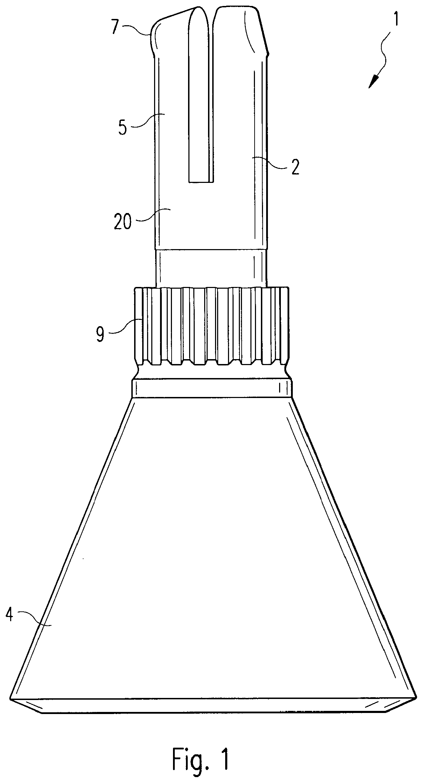

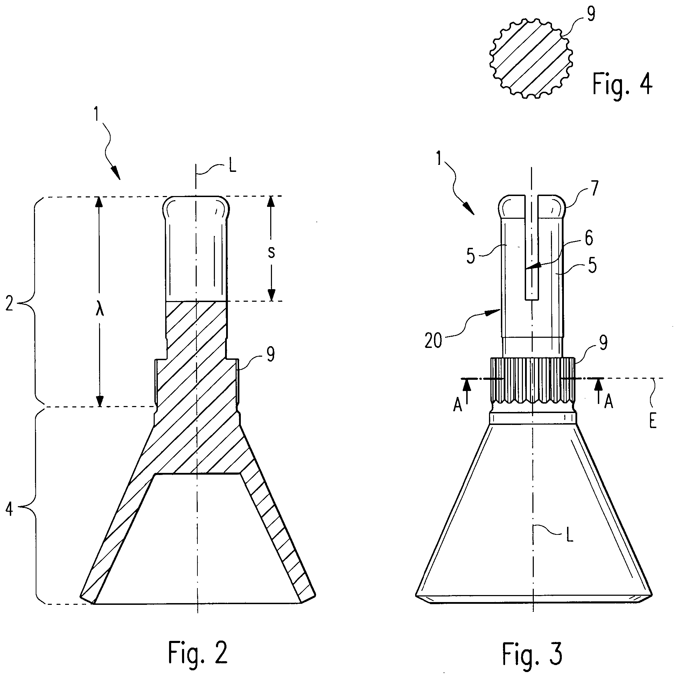

Fig. 1 zeigt eine Skizze einer Ansicht eines erfindungsgemäßen zahnärztlichen Werkzeugs 1; in Fig. 2 ist ein entsprechender Querschnitt skizziert. Das Werkzeug 1 umfasst einen Schaftbereich 2 und einen Arbeitsbereich 4. Der Schaftbereich 2 ist länglich, so dass er sich entlang einer Längsachse L erstreckt. Das Werkzeug 1 kann insbesondere für eine Behandlung von Zähnen vorgesehen sein, beispielsweise für eine prophylaktische Behandlung.

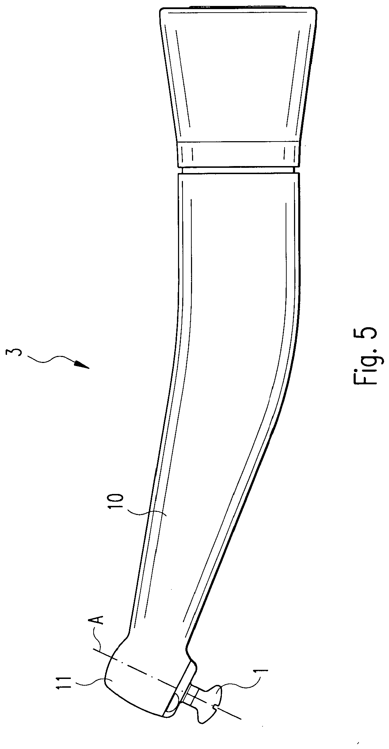

Fig. 5 zeigt beispielhaft ein zahnärztliches Handstück 3. Das Handstück 3 weist eine längliche Griffhülse 10 mit einem darin angeordneten Antrieb sowie einen, an einem vorderen Ende der Griffhülse 10 angeordneten Kopfbereich 11 auf. Vorzugsweise ist der Antrieb dafür ausgestaltet, durch einen (in den Figuren nicht gezeigten) Motor bewegt zu werden.

Bei dem Handstück 3 kann es sich um ein so genanntes Winkelstück handeln, insbesondere um ein Prophylaxe-Winkelstück.

Der Arbeitsbereich 4 kann beispielsweise als Polierer, Bürste, Reinigungsbürste, Schleifer oder Feile ausgebildet sein. Der Arbeitsbereich 4 kann dabei beispielsweise - wie beispielhaft in Fig. 2 gezeigt - kelchartig oder kegelig oder zylindrisch ausgebildet sein. Beispielsweise kann es sich bei dem Werkzeug, wie oben bereits kurz erwähnt, um ein Werkzeug für eine Prophylaxe-Behandlung handeln.

Das Werkzeug 1 ist dafür vorgesehen, mit dem Handstück 3 lösbar verbunden zu werden, insbesondere mit dessen Kopfbereich 11. Ein erfindungsgemäßes zahnärztliches System weist das Handstück 3 und das Werkzeug 1 auf, wobei das Werkzeug 1 wie für einen Betrieb des Handstücks 3 vorgesehen mit dem Kopfbereich 11 verbunden ist.

Der Kopfbereich 11 kann hierzu eine, mit dem Antrieb verbundene Antriebskomponente, beispielsweise in Form einer Hülse, aufweisen, die sich insbesondere entlang einer Achse A erstreckt und die dazu ausgestaltet ist, den Schaftbereich 2 des Werkzeugs 1 aufzunehmen, zu halten und mit dem Antrieb zu koppeln. Dabei ist die Gestaltung derart, dass das Werkzeug 1 mit dem Handstück 3 entsprechend verbunden werden kann, indem es - von außen kommend - mit seinem Schaftbereich 2 parallel zur Achse A ausgerichtet in die Hülse des Kopfbereichs 11 eingeschoben wird. Im eingesetzten Zustand des Werkzeugs 1 ist somit die Längsachse L des Schaftbereichs 2 parallel zur Achse A orientiert bzw. sie fällt mit der Achse A zusammen.

Die Achse A kann, wie bei der in Fig. 5 gezeigten Gestaltung der Fall, mit einer, durch die Griffhülse 10 festgelegten Längsachse einen Winkel - den so genannten Kopfwinkel - von beispielsweise 90° oder 100° einschließen.

Der Schaftbereich 2 des Werkzeugs 1 ist für eine betätigungslose, rastbare Einsetz- und Entnahmemöglichkeit ausgebildet. Insbesondere ist die Gestaltung derart, dass der Schaftbereich 2 zur Kopplung mit dem Antrieb bzw. mit der Antriebskomponente in den Kopfbereich 11 des Handstücks 3 eingesetzt werden kann und auch wieder aus dem Kopfbereich 11 entnommen werden kann, ohne dass hierfür ein Bedienelement des Handstücks 1 betätigt werden muss. Dabei ist eine Rastverbindung zwischen dem Schaftbereich 2 und der Antriebskomponente vorgesehen, durch die das Werkzeug 1 in dem Kopfbereich 11 gehalten wird. Die Rastverbindung ist also derart gestaltet, dass - bei eingesetztem Werkzeug 1 - der Schaftbereich 2 in Richtung der Achse A des Kopfbereichs 11 betrachtet in einer bestimmten, vorgesehenen Position gegenüber der Antriebskomponente gehalten wird. Mit anderen Worten dient die Rastverbindung zur axialen Sicherung des Werkzeugs 1 im Kopfbereich 11 bzw. gegenüber der Antriebskomponente.

Grundsätzlich kann das Werkzeug 1 aus einem Metall bestehen. Allerdings besteht vorzugsweise zumindest der Schaftbereich 2 des Werkzeugs 1 aus einem Kunststoff, einem Silikon oder einem Gummi. Durch diese Materialwahl lässt sich besonders geeignet erzielen, dass sich die Rastverbindung zwischen dem Schaftbereich 2 und der Antriebskomponente besonders einfach - insbesondere ohne Zuhilfenahme eines Hilfsinstruments - herstellen und wieder lösen lässt. Zum Herstellen der Rastverbindung muss dabei das Werkzeug 1 lediglich manuell in den Kopfbereich 11 eingesetzt bzw. eingeschoben werden, zum Lösen muss das Werkzeug 1 lediglich aus dem Kopfbereich 11 entnommen werden, beispielsweise durch manuelles Herausziehen.

Außerdem ist es vorteilhaft, zumindest den Schafbereich 2 des Werkzeugs 1 aus Kunststoff, Silikon oder Gummi zu gestalten, weil hierdurch eine besonders einfache und kostengünstige Herstellung ermöglicht ist. Auf diese Weise lässt sich das Werkzeug 1 insbesondere geeignet als Einweg-Teil gestalten. Dies ist beispielsweise besonders vorteilhaft, wenn es sich bei dem Werkzeug um ein Werkzeug für eine Prophylaxe-Behandlung handelt.

Gemäß dem Stand der Technik ist es üblich, dass Prophylaxe-Werkzeuge, wie Bürsten oder Polierkelche, (mehrfach) nach einer Verwendung aufbereitet und wieder verwendet werden. Im Rahmen einer Zahnsteinentfernung entstehen regelmäßig blutige Bereiche in der Mundhöhle, die im weiteren Verlauf mit bereits verwendeten Werkzeugen behandelt werden. Daher ist hier eine erhebliche hygienische Problematik gegeben. Durch Verwendung von entsprechenden Einweg-Teilen bzw. Einweg-Werkzeugen kann dem wirkungsvoll entgegnet werden.

Vorzugsweise besteht weiterhin auch der Arbeitsbereich 4 aus Kunststoff, Silikon oder Gummi, beispielsweise aus einem Elastomer. Dies ist herstellungstechnisch vorteilhaft. Insbesondere können dabei der Schaftbereich 2 und der Arbeitsbereich 4 aus Kunststoffen, Silikonen bzw. Gummis unterschiedlicher Härten bestehen. Beispielsweise kann der Schaftbereich 2 aus einem härteren Material gebildet sein als der Arbeitsbereich 4. Auf diese Weise eignet sich der Schaftbereich 2 besonders dazu, eine Bewegung der Antriebskomponente effektiv aufzunehmen, während der Arbeitsbereich 4 für eine Behandlung von Zähnen geeignete Materialeigenschaften aufweist.

Der Arbeitsbereich 4 kann jedoch auch beispielsweise Borsten aufweisen bzw. aus Borsten gebildet sein, so dass er als eine Bürste ausgebildet ist. Auch solche Borsten lassen sich herstellungstechnisch vorteilhaft mit dem aus Kunststoff bestehenden Schaftbereich 2 verbinden.

Vorzugsweise sind der Schaftbereich 2 und der Arbeitsbereich 4 einstückig miteinander verbunden, so dass also der Schaftbereich 2 und der Arbeitsbereich 4 zusammen ein Stück bilden. Auch dies ist vorteilhaft mit Bezug auf die Herstellungsmöglichkeit des Werkzeugs. Beispielsweise lässt sich das Werkzeug 1 auf diese Weise in einem Zweikomponenten-Spritzverfahren herstellen.

Vorzugsweise ist der Schaftbereich 2 im Wesentlichen zylinderartig ausgebildet. Im gezeigten Beispiel ist der Schaftbereich 2 derart geformt, dass er einen Außenflächenbereich 20 aufweist, der einen symmetrisch zur Längsachse L orientierten Kreiszylinder beschreibt.

Weiterhin vorzugsweise ist der Schaftbereich 2 - bezüglich seiner Längsachse L - zur axialen oder radialen Verrastung mit der Antriebskomponente des Handstücks 3 ausgebildet. Mit anderen Worten kann die Rastverbindung zwischen dem Schaftbereich 2 und der Antriebskomponente mit Bezug auf die Längsachse L axial bzw. radial wirkend ausgestaltet sein.

In Fig. 3 ist eine Seitenansicht des in Fig. 2 gezeigten Beispiels skizziert. Bei dieser Ausgestaltung sind an dem Schaftbereich 2 zwei Federarme 5 angeordnet bzw. als Teile des Schaftbereichs 2 gebildet. Die Federarme 5 weisen dabei nach außen ragende Rastvorsprünge 7 oder Rastverdickungen auf. Diese Rastvorsprünge 7 erstrecken sich mit anderen Worten mit Bezug auf die Längsachse L des Schaftbereichs 2 radial nach außen, insbesondere radial nach außen über den Außenflächenbereich 20 hinaus. Dabei bilden die Rastvorsprünge 7 eine Werkzeug-seitige Rastkomponente der Rastverbindung zwischen dem Schaftbereich 2 und der Antriebskomponente. Vorzugsweise sind die Rastvorsprünge 7 an denjenigen Enden der Federarme 5 ausgebildet, die dem Arbeitsbereich 4 gegenüber liegen.

Die in diesem Fall hierzu korrespondierende Antriebskomponenten-seitige Rastkomponente ist vorzugsweise durch eine entsprechend korrespondierende Vertiefung in der Antriebskomponente gebildet, beispielsweise also durch eine, in der Hülse ausgebildete, "innere" Ringnut.

Im gezeigten Beispiel sind die beiden Federarme 5 parallel zur Längsachse L verlaufend gestaltet. Zur Bildung der Federarme 5 kann dabei vorteilhaft der Schaftbereich 2 - wie in Fig. 3 beispielhaft gezeigt - einen Schlitz 6 aufweisen, der insbesondere an dem, dem Arbeitsbereich 4 gegenüber liegenden Ende des Schaftbereichs 2 gebildet ist. Im gezeigten Beispiel erstreckt sich der Schlitz 6 mit einer Länge s geradlinig parallel zur Längsachse L.

Im gezeigten Beispiel weist der Schaftbereich 2 entlang der Längsachse L eine Längserstreckung λ auf, wobei sich der Schlitz 6 entlang der Längsachse L etwa über die Hälfte dieser Längserstreckung λ des Schaftbereichs 2 erstreckt. Beispielsweise kann für die Beziehung zwischen der Längserstreckung λ des Schaftbereichs 2 und der Länge s des Schlitzes 0,25 λ < s < 0,75 λ vorgesehen sein.

Die Rastvorsprünge 7 können - wie in Fig. 3 gezeigt - an denjenigen Enden der Federarme 5 gebildet sein, die dem Arbeitsbereich 4 gegenüber liegen.

Vorzugsweise sind die Rastvorsprünge 7 derart geformt, dass ihre radial nach außen weisenden Flächen lediglich eine nach außen weisende Wölbung bilden, also insbesondere keine Kante. So lässt sich insbesondere verhindern, dass die Rastverbindung zwei ineinandergreifende, normal zu der Längsachse L orientierte Schulterflächenbereiche umfasst, die ein manuelles Lösen der Rastverbindung deutlich erschweren oder praktisch unmöglich machen würden. Daher ist die lediglich gewölbte Gestaltung der Rastvorsprünge 7 insbesondere vorteilhaft mit Bezug auf eine geeignete Lösbarkeit der Rastverbindung zwischen dem Schaftbereich 2 und der Antriebskomponente. Beispielsweise kann der Nutzer das Werkzeug 1 aus dem Handstück 3 entnehmen, indem er einfach an dem Werkzeug 1 in Längsrichtung ausreichend fest zieht, so dass das Werkzeug 1 aus dem Handstück 3 heraus schnappt.

Vorzugsweise ist die Kopplung zwischen dem Schaftbereich 2 und der Antriebskomponente als eine formschlüssige Kopplung gestaltet. Dies ist vorteilhaft mit Bezug auf die Effektivität der Kopplung. Fig. 4 zeigt hierzu eine Skizze eines Schnitts entlang der Linie A - A in Fig. 3, also einen Schnitt in einer Ebene E, die normal zu der Längsachse L orientiert ist. Wie insbesondere in den Figuren 3 und 4 beispielhaft skizziert, kann der Schaftbereich 2 einen Mitnehmerbereich 9 aufweisen, der für die formschlüssige Kopplung mit der Antriebskomponente des zahnärztlichen Handstücks 3 ausgebildet ist, insbesondere für eine, in der Ebene E wirkende, formschlüssige Kopplung. Auf diese Weise lässt sich erzielen, dass eine, um die Achse A verlaufende Drehbewegung der Antriebskomponente besonders geeignet und effektiv auf den Schaftbereich 2 übertragen werden kann.

Vorzugsweise erstreckt sich der Mitnehmerbereich 9 zumindest teilweise radial nach außen über die Außenfläche 20 hinaus.

Dementsprechend weist die Antriebskomponente einen Eingriffsbereich auf, der zu dem Mitnehmerbereich 9 derart korrespondierend gestaltet ist, dass er - bei eingesetztem Werkzeug 1 - zusammen mit dem Mitnehmerbereich 9 die Kopplung zwischen der Antriebskomponente und dem Schaftbereich 2 bildet.

Die formschlüssige Kopplung ist insbesondere auch vorteilhaft mit Bezug auf eine Kraftübertragung von der Antriebskomponente auf den Schaftbereich 2 im Fall einer Drehbewegung, die ihre Drehrichtung wiederholt ändert, also insbesondere einer oszillierenden Drehbewegung, wie sie beispielsweise vorgesehen sein kann, wenn es sich bei dem Werkzeug um ein Polierwerkzeug handelt. So lässt sich eine beinahe spielfreie Kraftübertragung realisieren.

Beispielsweise kann der Mitnehmerbereich 9 einen eckigen, vorzugsweise polygonalen Außenumfang aufweisen. Wie aus dem in Fig. 4 gezeigten Schnitt hervorgeht, kann eine Vielzahnverbindung vorgesehen sein. Bei dem gezeigten Beispiel sind 20 Zähne über den Umfang gleichmäßig verteilt ausgebildet. Die Anzahl der Zähne stimmt dabei mit der Anzahl der möglichen Drehpositionen überein, in der der Schaftbereich 2 des Werkzeugs 1 in den Kopfbereich 11 des Handstücks 3 bzw. die Antriebskomponente eingesetzt werden kann, wobei diese Anzahl frei in geeigneter Weise gewählt werden kann.

Im Allgemeinen kann der Antrieb dazu ausgebildet sein, eine Drehbewegung und/oder eine Schwingung und/oder eine axiale Hubbewegung auf das Werkzeug 1 zu übertragen.

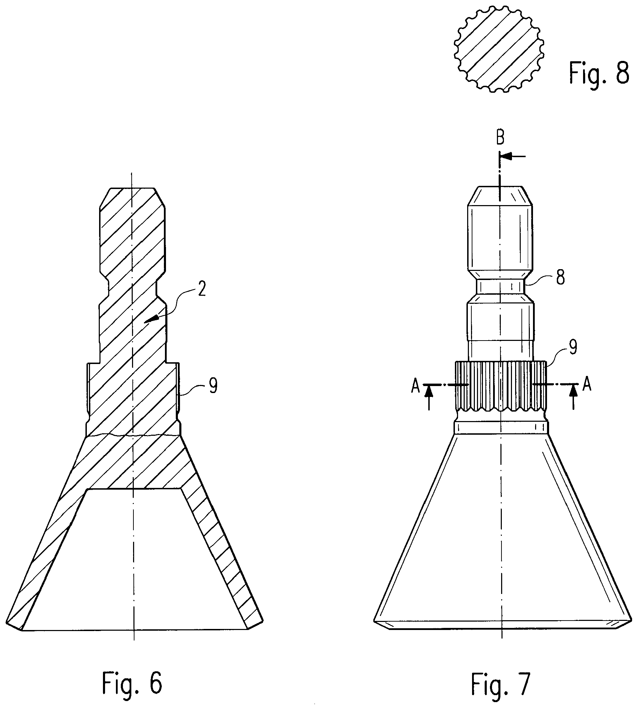

In den Figuren 6 bis 8 ist ein weiteres Ausführungsbeispiel eines Werkzeugs dargestellt. Im Folgenden wird lediglich auf die Unterschiede zum oben beschriebenen Werkzeug eingegangen. Die Bezugszeichen sind in analoger Weise gebraucht.

Bei der hier gezeigten Gestaltung weist der Schaftbereich 2 eine Rastausnehmung 8 auf, die zur Herstellung der Rastverbindung zwischen dem Schaftbereich 2 und der Antriebskomponente dient. Vorzugsweise erstreckt sich die Rastausnehmung 8 über den gesamten Umfang hinweg, also ringartig, insbesondere in einer, normal zur Längsachse L orientierten Ebene. Die Rastausnehmung 8 bildet also bei dieser Gestaltung die Werkzeug-seitige Rastkomponente. Die Antriebskomponente weist in diesem Fall zur Herstellung der Rastverbindung eine entsprechende Rastkomponente auf, die in die Rastausnehmung 8 eingreift, wenn das Werkzeug 1, wie vorgesehen, im Kopfbereich 11 eingesetzt ist.

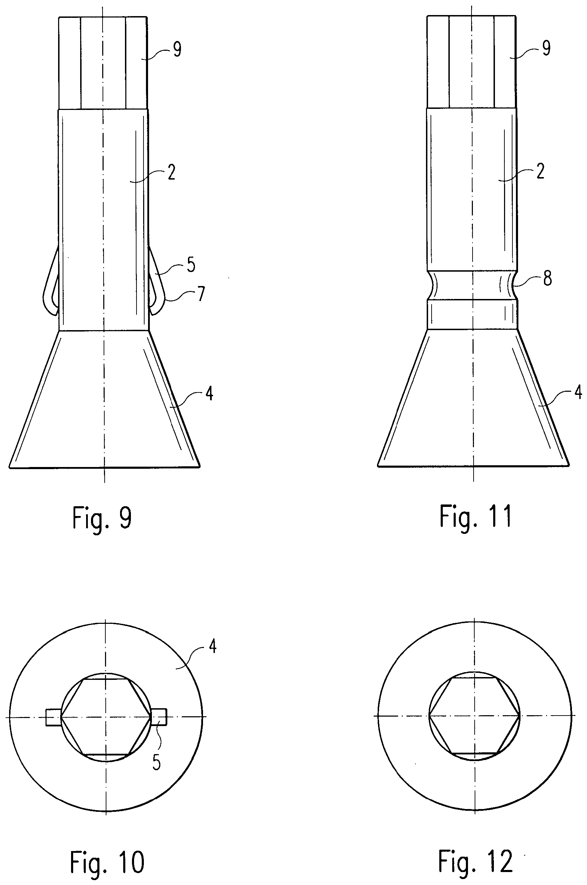

In den Figuren 9 bis 15 sind weitere Ausgestaltungmöglichkeiten des Werkzeugs skizziert. Wie in den Figuren 9 und 10 skizziert, kann der Mitnehmerbereich 9 an demjenigen Ende des Schaftbereichs 2 ausgebildet sein, der dem Arbeitsbereich 4 gegenüber liegt. Die Federarme 5 mit den Rastvorsprüngen 7 können dementsprechend zwischen dem Mitnehmerbereich 9 und dem Arbeitsbereich 4 ausgebildet sein. Wie weiterhin exemplarisch aus den Figuren 9 und 10 hervorgeht, kann der Mitnehmerbereich 9 einen polygonalen, insbesondere hexagonalen Querschnitt aufweisen.

Wie in den Figuren 11 und 12 skizziert, kann auch als Werkzeug-seitige Rastkomponente die Rastausnehmung 8 zwischen dem Mitnehmerbereich 9 und dem Arbeitsbereich 4 ausgebildet sein.

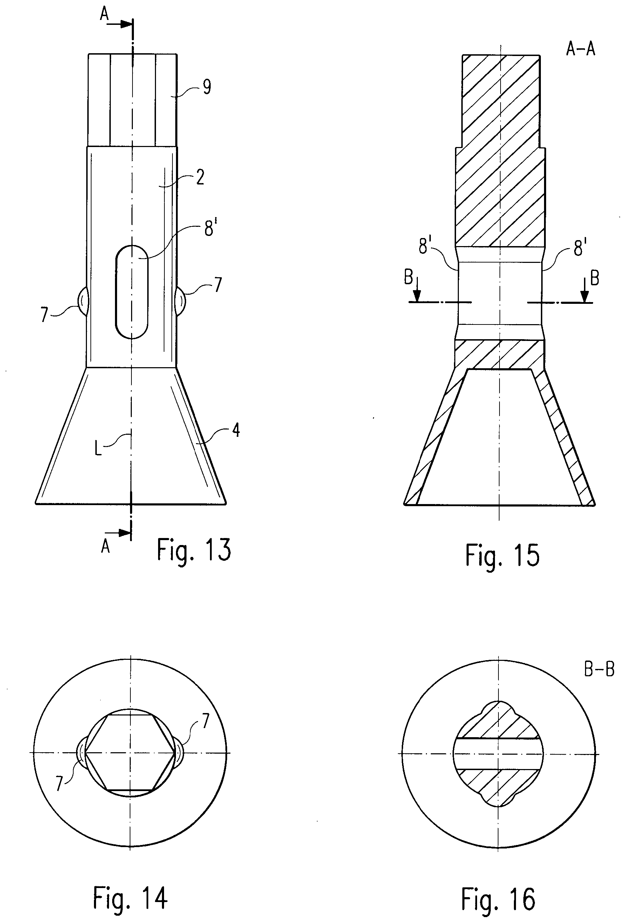

Bei dem in den Figuren 13 bis 16 gezeigten Beispiel, welches nicht Gegenstand der Ansprüche ist, kann die Werkzeug-seitige Rastkomponente sowohl Rastvorsprünge 7, als auch eine Rastausnehmung 8' aufweisen. Die Rastausnehmung 8' ist bei diesem Beispiel länglich gestaltet, wobei sie sich parallel zur Längsachse L erstreckt. Dabei können, zwei entsprechende Rastausnehmungen 8', insbesondere diametral gegenüberliegend ausgebildet sein, oder - wie aus Fig. 16 hervorgeht - als eine, quer zur Längsachse L verlaufende Durchgangsöffnung des Schaftbereichs 2 gestaltet sein.

Bei den oben, anhand der Figuren 2 bis 10, gezeigten Beispielen weist der Schaftbereich 2 zwei Federarme 5 auf. Grundsätzlich ist es jedoch auch möglich, für den Schaftbereich 2 lediglich einen Federarm vorzusehen oder mehr als zwei Federarme.

Wie oben erwähnt, ist das Werkzeug 1 für eine betätigungslose Entnahmemöglichkeit ausgebildet. Allerdings kann für eine erleichterte Entnahme ein becherartiges Element vorgesehen sein, das an einem oberen Rand einen Gabel-artigen Bereich aufweist, derart, dass das zu entnehmende Werkzeug 1 in den Gabel-artigen Bereich gehakt werden kann und anschließend - bei fixiertem Element - durch ein Anheben bzw. Ziehen des Handstücks 3 ohne Zuhilfenahme einer Hand das Werkzeug 1 aus dem Kopfbereich 11 herausgelöst werden kann.

Die Griffhülse 10 des Handstücks 3 weist vorzugsweise eine Kunststoffummantelung auf. Auch der Kopfbereich 11 weist vorzugsweise eine Kunststoffummantelung auf. Hierfür wird bevorzugt als Kunststoffmaterial Polyetheretherketon (PEEK) verwendet. Allerdings eignet sich grundsätzlich auch ein weniger beständiges Kunststoffmaterial, wie beispielsweise Polyphenylsulfon (PPSU) oder Polyetherimid (PEI).

Auch stellt Kunststoff ein angenehmes Griffmaterial dar und es ist außerdem vorteilhaft, weil es ein vergleichsweise niedriges Gewicht aufweist. Auch können Innenteile vorgesehen sein, die selbstfurchende Gewinde aufweisen, die sich - ohne vorgefertigte Gewinde in der Griffhülse 10 verschrauben lassen. So ist eine besonders einfache und kostengünstige Herstellung ermöglicht.

Vorzugsweise besteht die Griffhülse 10 mit dem Kopfbereich 11 aus Kunststoff. Insbesondere kann die Gestaltung derart sein, dass sowohl die Griffhülse 10, als auch der Kopfbereich 11 eine Kunststoffummantelung aufweisen, wobei diese beiden Kunststoffummantelungen zusammenhängend gestaltet sind, also ein Stück bildend. Auf diese Weise lässt sich insbesondere erzielen, dass das Handstück 3 über die Griffhülse 10 und den Kopfbereich 11 hinweg betrachtet keinerlei Trennfuge bzw. Trennkante aufweist, insbesondere eine durchgehend glatte Oberfläche.

Allerdings können grundsätzlich die Griffhülse 10 und der Kopfbereich 11 im Allgemeinen auch einen Außenflächenbereich aufweisen, der aus Metall besteht, beispielsweise aus Stahl, Buntmetall oder Titan.

Fig. 17 dient zur Illustration von Größenverhältnissen, wie sie mit dem hier beschriebenen Werkzeug bzw. System erzielt werden können: Gerade im Seitenzahnbereich wirkt sich eine relativ große Kopfhöhe als sehr nachteilig aus. Um bei der Anwendung vernünftige Ergebnisse zu erhalten, muss das Werkzeug möglichst senkrecht zu der zu bearbeitenden Oberfläche eingesetzt werden; hierbei ist die Höhe des Kopfes besonders störend und hinderlich. Im Gegensatz zu der in Fig. 17 auf der linken Seite gezeigten Ausführung ist es denkbar, die Höhe des Kopfes mit dem Werkzeug noch weiter deutlich zu reduzieren.

Mit der Erfindung lassen sich insbesondere die folgenden Vorteile erzielen:
- Das Werkzeug und der Kopfbereich lassen sich mit besonders geringer Baugröße gestalten.
- Das Werkzeug eignet sich sowohl für einen rotierenden, als auch für einen oszillierenden Antrieb, wobei auch eine axiale Hubbewegung übertragen werden kann.
- Das Werkzeug lässt sich besonders einfach und dabei hygienisch in den Kopfbereich einsetzen und aus dem Kopfbereich entnehmen.
- Das Handstück lässt sich aufgrund fehlender Trennkanten besonders gut reinigen.
- Das Handstück weist ein besonders geringes Gewicht auf.
- Das Werkzeug lässt sich besonders kostengünstig herstellen, beispielsweise so, dass es fertig von einer Maschine fällt.
- Das Handstück bietet ein besonders angenehmes Griffgefühl.
- Die Kraftübertragung von der Antriebskomponente des Handstücks auf das Werkzeug ist besonders effektiv, insbesondere aufgrund eines besonders geringen Mitnahmespiels bei einer oszillierenden Verwendung.
- Das Handstück lässt sich besonders kostengünstig herstellen, da kein Betätigungssystem zum Lösen des Werkzeugs notwendig ist.

## Patentansprüche

1. Zahnärztliches Werkzeug (1) mit
einem Schaftbereich (2), der zur Kopplung mit einem zahnärztlichen Handstück (3) ausgebildet ist, sowie
einem mit dem Schaftbereich (2) verbundenen Arbeitsbereich (4),
wobei der Schaftbereich (2) des zahnärztlichen Werkzeugs (1) für eine betätigungslose, rastbare Einsetz- und Entnahmemöglichkeit ausgebildet ist,
wobei zumindest der Schaftbereich (2) des Werkzeugs aus Kunststoff, Silikon oder Gummi besteht,
wobei der Schaftbereich (2) im Wesentlichen zylinderartig ausgebildet und - bezüglich einer Längsachse (L) des Schaftbereichs (2) - zur axialen oder radialen Verrastung mit einer Antriebskomponente des zahnärztlichen Handstücks (3) ausgebildet ist, wobei
der Schaftbereich (2) einen sich vorzugsweise in der Nähe des Arbeitsbereichs (4) befindenden Mitnehmerbereich (9) aufweist, der für eine formschlüssige Kopplung mit einer Antriebskomponente des zahnärztlichen Handstücks (3) ausgebildet ist, durch die eine um die Längsachse (L) verlaufende Drehbewegung der Antriebskomponente auf den Schaftbereich (2) übertragen werden kann,
**dadurch gekennzeichnet, dass**
an dem Schaftbereich (2) ein oder mehrere Federarme (5) angeordnet sind oder dass der Schaftberei (2) eine sich über den gemeinsamen Umfang erstreckende ringartige Rastausnehmung (8) aufweist.

2. Zahnärztliches Werkzeug nach Anspruch 1,
**dadurch gekennzeichnet,**
**dass** auch der Arbeitsbereich (4) aus Kunststoff, Silikon oder Gummi besteht, wobei vorzugsweise Schaftbereich (2) und Arbeitsbereich (4) aus Kunststoffen, Silikonen bzw. Gummis unterschiedlicher Härte bestehen.

3. Zahnärztliches Werkzeug nach Anspruch 2,
**dadurch gekennzeichnet,**
**dass** der Schaftbereich (2) und der Arbeitsbereich (4) einstückig miteinander verbunden sind.

4. Zahnärztliches Werkzeug nach einem der vorherigen Ansprüche, **dadurch gekennzeichnet,**
**dass** der Schaftbereich (2) vorzugsweise an seinem dem Arbeitsbereich (4) gegenüberliegenden Ende mindestens einen Schlitz (6) aufweist, durch welchen parallel zur Längsachse (L) verlaufende Federarme (5) gebildet werden.

5. Zahnärztliches Werkzeug nach Anspruch 4,
**dadurch gekennzeichnet,**
**dass** der bzw. die Federarme (5) vorzugsweise an ihrem dem Arbeitsbereich (4) gegenüberliegenden Ende nach außen ragende Rastvorsprünge (7) oder Rastverdickungen aufweisen.

6. Zahnärztliches Werkzeug nach einem der Ansprüche 1 bis 5,
**dadurch gekennzeichnet,**
**dass** der Mitnehmerbereich (9) einen eckigen, vorzugsweise einen polygonalen Außenumfang aufweist.

7. Zahnärztliches Werkzeug nach einem der Ansprüche 1 bis 5,
**dadurch gekennzeichnet,**
**dass** der Mitnehmerbereich (9) für eine Vielzahnverbindung ausgebildet ist.

8. Zahnärztliches Werkzeug nach einem der vorherigen Ansprüche, **dadurch gekennzeichnet,**
**dass** der Arbeitsbereich (4) als Polierer, Bürste, Schleifer oder Feile ausgebildet ist.

9. Zahnärztliches Werkzeug nach Anspruch 8,
**dadurch gekennzeichnet,**
**dass** der Arbeitsbereich (4) kelchartig, kegelig oder zylindrisch ausgebildet ist.

10. Zahnärztliches System mit
einem zahnärztlichen Handstück (3), welches eine längliche Griffhülse (10) mit einem darin angeordneten Antrieb sowie einen am vorderen Ende der Griffhülse (10) angeordneten Kopfbereich (11) zur lösbaren Aufnahme eines zahnärztlichen Werkzeugs aufweist, sowie
einem zahnärztlichen Werkzeug (1) nach einem der vorherigen Ansprüche.

11. Zahnärztliches System nach Anspruch 10,
**dadurch gekennzeichnet,**
**dass** der Antrieb dazu ausgebildet ist, eine Drehbewegung und/oder Schwingung und/oder axiale Hubbewegung auf das Werkzeug (1) zu übertragen.

12. Zahnärztliches System nach Anspruch 10 oder 11,
**dadurch gekennzeichnet,**
**dass** die Griffhülse (10) und vorzugsweise auch der Kopfbereich (11) eine Kunststoffummantelung aufweisen.

13. Zahnärztliches System nach Anspruch 12,
**dadurch gekennzeichnet,**
**dass** die Griffhülse (10) mit dem Kopfbereich (11) aus Kunststoff besteht.

14. Zahnärztliches System nach Anspruch 12 oder 13,
**dadurch gekennzeichnet,**
**dass** es sich bei dem Kunststoff um PEEK, PPSU oder PEI handelt.

## Claims

1. Dental tool (1) having
a shank region (2) which is configured for coupling to a dental handpiece (3), and
a working region (4) which is connected to the shank region (2),
wherein the shank region (2) of the dental tool (1) is configured for allowing latchable insertion and removal without actuation,
wherein at least the shank region (2) of the tool consists of plastic, silicone or rubber,
wherein the shank region (2) is of substantially cylindrical configuration and - in relation to a longitudinal axis (L) of the shank region (2) - is configured for axial or radial latching to a drive component of the dental handpiece (3),
wherein the shank region (2) has a driver region (9), preferably situated in the vicinity of the working region (4), which is configured for form-fitting coupling to a drive component of the dental handpiece (3), by way of which a rotational movement, realized around the longitudinal axis (L), of the drive component can be transmitted to the shank region (2),
**characterized in that**
one or more spring arms (5) are arranged on the shank region (2), or **in that** the shank region (2) has a ring-like latching recess (8) which extends over the common circumference.

2. Dental tool according to Claim 1,
**characterized**
**in that** the working region (4), too, consists of plastic, silicone or rubber, wherein preferably the shank region (2) and working region (4) consist of plastics, silicones or rubbers of different hardnesses.

3. Dental tool according to Claim 2,
**characterized**
**in that** the shank region (2) and the working region (4) are integrally connected to one another.

4. Dental tool according to one of the preceding claims,
**characterized**
**in that** the shank region (2), preferably at its end situated opposite the working region (4), has at least one slot (6) by which spring arms (5) extending parallel to the longitudinal axis (L) are formed.

5. Dental tool according to Claim 4,
**characterized**
**in that** the spring arm(s) (5), preferably at its/their end situated opposite the working region (4), has/have outwardly protruding latching projections (7) or latching thickenings.

6. Dental tool according to one of Claims 1 to 5, **characterized**
**in that** the driver region (9) has an angular, preferably a polygonal, outer circumference.

7. Dental tool according to one of Claims 1 to 5, **characterized**
**in that** the driver region (9) is configured for a multiple-tooth connection.

8. Dental tool according to one of the preceding claims,
**characterized**
**in that** the working region (4) is configured as a polisher, brush, grinder or file.

9. Dental tool according to Claim 8,
**characterized**
**in that** the working region (4) is of goblet-like, conical or cylindrical configuration.

10. Dental system having
a dental handpiece (3) which has an elongate grip sleeve (10) with a drive arranged therein and has a head region (11) arranged on the front end of the grip sleeve (10) and serving for releasably receiving a dental tool, and a dental tool (1) according to one of the preceding claims.

11. Dental system according to Claim 10,
**characterized**
**in that** the drive is configured to transmit a rotational movement and/or vibration and/or axial stroke movement to the tool (1).

12. Dental system according to Claim 10 or 11, **characterized**
**in that** the grip sleeve (10), and preferably also the head region (11), has a plastic covering.

13. Dental system according to Claim 12,
**characterized**
**in that** the grip sleeve (10), with the head region (11), consists of plastic.

14. Dental system according to Claim 12 or 13, **characterized**
**in that** the plastic is PEEK, PPSU or PEI.

## Revendications

1. Outil dentaire (1) avec
une zone de tige (2), qui est réalisée pour être couplée à une pièce à main dentaire (3), ainsi
qu'une zone de travail (4) raccordée à la zone de tige (2),
dans lequel la zone de tige (2) de l'outil dentaire (1) est réalisée pour une possibilité d'insertion et de retrait pouvant être enclenchée sans actionnement,
dans lequel au moins la zone de tige (2) de l'outil est constituée de matière plastique, de silicone ou de caoutchouc,
dans lequel la zone de tige (2) est réalisée de manière sensiblement cylindrique et est réalisée pour être enclenchée axialement ou radialement avec un composant d'entraînement de la pièce à main dentaire (3) - par rapport à un axe longitudinal (L) de la zone de tige (2),
dans lequel
la zone de tige (2) présente une zone d'entraînement (9) se trouvant de préférence à proximité de la zone de travail (4), qui est réalisée pour être couplée par complémentarité de forme avec un composant d'entraînement de la pièce à main dentaire (3), par lequel un mouvement de rotation, s'étendant autour de l'axe longitudinal (L), du composant d'entraînement peut être transmis sur la zone de tige (2),
**caractérisé en ce que** un ou plusieurs bras à ressort (5) sont disposés sur la zone de tige (2), ou que la zone de tige (2) présente un évidement d'enclenchement (8) annulaire s'étendant sur la périphérie commune.

2. Outil dentaire selon la revendication 1,
**caractérisé en ce que** la zone de travail (4) également est constituée de matière plastique, de silicone ou de caoutchouc, dans lequel de préférence la zone de tige (2) et la zone de travail (4) sont constituées de matières plastiques, de silicones ou de caoutchoucs à dureté différente.

3. Outil dentaire selon la revendication 2,
**caractérisé en ce que** la zone de tige (2) et la zone de travail (4) sont raccordées l'une à l'autre d'un seul tenant.

4. Outil dentaire selon l'une quelconque des revendications précédentes,
**caractérisé en ce que** la zone de tige (2) présente, de préférence sur son extrémité faisant face à la zone de travail (4), au moins une entaille (6), par laquelle sont formés des bras à ressort (5) s'étendant de manière parallèle à l'axe longitudinal (L).

5. Outil dentaire selon la revendication 4,
**caractérisé en ce que** le ou les bras à ressort (5) présentent de préférence sur leur extrémité faisant face à la zone de travail (4), des parties faisant saillie d'enclenchement (7) ou des épaississements d'enclenchement dépassant vers l'extérieur.

6. Outil dentaire selon l'une quelconque des revendications 1 à 5,
**caractérisé en ce que** la zone d'entraînement (9) présente une périphérie extérieure angulaire, de préférence une périphérie extérieure polygonale.

7. Outil dentaire selon l'une quelconque des revendications 1 à 5,
**caractérisé en ce que** la zone d'entraînement (9) est réalisée pour un raccordement denté.

8. Outil dentaire selon l'une quelconque des revendications précédentes,
**caractérisé en ce que** la zone de travail (4) est réalisée en tant que polisseur, brosse, rectifieur ou lime.

9. Outil dentaire selon la revendication 8,
**caractérisé en ce que** la zone de travail (4) est réalisée à la manière d'un calice, de manière conique ou cylindrique.

10. Système dentaire avec
une pièce à main dentaire (3), laquelle présente une douille de préhension allongée (10) avec un entraînement disposé à l'intérieur ainsi qu'une zone de tête (11) disposée sur l'extrémité avant de la douille de préhension (10), destinée à loger de manière amovible un outil dentaire, ainsi qu'un outil dentaire (1) selon l'une quelconque des revendications précédentes.

11. Système dentaire selon la revendication 10,
**caractérisé en ce que** l'entraînement est réalisé pour transmettre un mouvement de rotation et/ou une oscillation et/ou un déplacement par levage axial sur l'outil (1).

12. Système dentaire selon la revendication 10 ou 11,
**caractérisé en ce que** la douille de préhension (10) et de préférence également la zone de tête (11) présentent une gaine en matière plastique.

13. Système dentaire selon la revendication 12,
**caractérisé en ce que** la douille de préhension (10) avec la zone de tête (11) est constituée de matière plastique.

14. Système dentaire selon la revendication 12 ou 13,
**caractérisé en ce que** la matière plastique est du PEEK du PPSU ou du PEI.
